Europäisches Patentamt

European Patent Office

Office européen des brevets

(19)

(11) Numéro de publication: **0 155 201**
**B1**

(12) **FASCICULE DE BREVET EUROPÉEN**

(45) Date de publication du fascicule du brevet:
**12.08.87**

(51) Int. Cl.⁴: **F 16 K 41/00,** F 16 J 15/40,
F 16 K 49/00

(21) Numéro de dépôt: **85400212.8**

(22) Date de dépôt: **08.02.85**

(54) Dispositif de refroidissement du fourreau de la tige de commande d'un robinet à joint gelé.

(30) Priorité: **10.02.84 FR 8402046**

(43) Date de publication de la demande:
**18.09.85 Bulletin 85/38**

(45) Mention de la délivrance du brevet:
**12.08.87 Bulletin 87/33**

(84) Etats contractants désignés:
**BE CH DE GB IT LI LU NL**

(56) Documents cité:
**DE-B-1 222 333**
**FR-A-2 000 886**
**FR-A-2 332 473**
**US-A-3 049 150**
**US-A-3 554 558**

(73) Titulaire: **NOVATOME, La Boursidière R.N. 186,**
**F-92357 Le Plessis Robinson (FR)**

(72) Inventeur: **Force, Christian, 29 route de**
**Rambouillet, F-91530 St. Cheron (FR)**

(74) Mandataire: **Moncheny, Michel, c/o Cabinet**
**Lavoix 2 Place d'Estienne d'Orves, F-75441 Paris**
**Cedex 09 (FR)**

LIBER, STOCKHOLM 1987

## Description

L'invention concerne un dispositif de refroidissement du fourreau de la tige de commande d'un robinet à joint gelé destiné à régler l'écoulement d'une substance à bas point de fusion.

Pour l'exploitation des réacteurs nucléaires à neutrons rapides, on utilise généralement du sodium liquide, aussi bien comme fluide primaire pour élever la chaleur des assemblages du coeur que comme fluide secondaire pour transporter cette chaleur vers les générateurs de vapeur. Une centrale nucléaire à neutrons rapides comporte donc des circuits de circulation de sodium dont le point de fusion est voisin de 98°C.

Le sodium circule dans des conduites calorifugées et sa circulation dans ces conduites peut être réglée par des robinets dont le corps est intercalé sur la conduite de circulation du sodium. Ce corps recevant le sodium liquide comporte une ouverture d'entrée et une ouverture de sortie qui peut être fermée par un opercule lui-même relié à une tige de commande mobile axialement ou en rotation dans un fourreau débouchant dans le corps du robinet. Le fourreau et la tige de commande sont disposés verticalement et prolongent le corps du robinet vers le haut. La partie supérieure du fourreau et de la tige de commande se trouve en dehors de la zone calorifugée qui entoure le corps du robinet. C'est dans cette partie que se trouve le mécanisme de manoeuvre de la tige de commande pour son déplacement axial ou en rotation permettant l'ouverture ou la fermeture du robinet par déplacement de l'opercule.

Le diamètre intérieur du fourreau est un peu supérieur au diamètre de la tige de commande, si bien qu'un espace annulaire subsiste entre la paroi du fourreau et la tige de commande. Cet espace annulaire communique avec le corps du robinet et se remplit de sodium venant de ce corps. Dans la partie non calorifugée du fourreau, le sodium remplissant l'espace annulaire se refroidit progressivement jusqu'à atteindre une température inférieure à son point de fusion. Il se constitue alors un joint de sodium solidifié appelé "joint gelé" qui permet d'assurer l'étanchéité au sodium, entre la tige de commande et le fourreau. Le sodium étant un métal mou, les déplacements axiaux ou en rotation de la tige de commande s'accompagnent d'un effort relativement faible.

Pour assurer un refroidissement du sodium remplissant l'espace annulaire autour de la tige de commande jusqu'en-dessous du point de fusion, il est nécessaire de prévoir un fourreau d'une hauteur suffisante. Dans le cas de conduites de sodium et de robinets de grandes dimensions cette hauteur peut rendre ces robinets encombrants, d'autant plus que le fourreau est surmonté par le mécanisme de déplacement de la tige de commande. Pour diminuer l'élancement du fourreau et de la tige, il faut alors augmenter leur diamètre, ce qui augmente d'autant le diamètre de l'espace annulaire dans lequel on constitue le joint gelé et donc la section de sodium gelé qui doit être rompue. Cet accroissement des dimensions du fourreau et de la tige entraîne aussi des pertes thermiques accrues migrant par la tige et son fourreau et éloignant du corps la zone du joint gelé.

On a donc proposé d'utiliser des ailettes de refroidissement radiales ou longitudinales fixées sur la surface extérieure du fourreau, pour diminuer la longueur de ce fourreau et de la tige de manoeuvre. Ces ailettes permettent effectivement d'accélérer le refroidissement du sodium remplissant l'espace annulaire entre la tige et le fourreau et donc de diminuer la hauteur du fourreau et la longueur de la tige de commande mais, dans des proportions insuffisantes pour régler tous les problèmes dus à l'élancement de la tige de commande. De plus, les ailettes augmentent le diamètre extérieur et l'inertie du fourreau que peut devenir extrêmenent encombrant( p. ex. US-A- 3 554 558).

Enfin, l'élancement du fourreau et de la tige de manoeuvre des robinets à sodium liquide connus actuellement est la cause d'une tenue médiocre aux séismes de ces robinets.

Le but de l'invention est donc de proposer un dispositif de refroidissement du fourreau de la tige de commande d'un robinet à joint gelé destiné à régler l'écoulement d'une substance à bas point de fusion et comportant un corps recevant la substance à l'état liquide et ayant une ouverture d'entrée et une ouverture de sortie qui peut être fermée par un opercule solidaire de la tige de commande ainsi qu'une ouverture de mise en communication de la chambre avec le fourreau disposé verticalement et ayant un diamètre intérieur un peu supérieur au diamètre de la tige de commande, de telle sorte que la substance liquide vienne remplir l'espace annulaire réservé entre le fourreau et la tige de commande pour y constituer localement un joint gelé par refroidissement dans le fourreau, ce dispositif de refroidissement devant permettre de diminuer la longueur du fourreau et de la tige de commande dans de grandes proportions sans nécessiter l'utilisation de moyens de refroidissement encombrants autour du fourreau.

Dans ce but, le dispositif de refroidissement suivant l'invention est constitué par

- un boitier symétrique de révolution fixé autour du fourreau, coaxialement à celui-ci, sur une hauteur au moins égale au diamètre extérieur du fourreau et fermé à sa périphérie par une virole externe coaxiale au fourreau,

- au mois trois caloducs du type à évaporation et condensation d'un liquide d'échange thermique, traversant la virole externe du boitier, du façon que la partie du caloduc où a lieu l'évaporation du liquide d'échange soit à l'intérieur du boitier et la partie où a lieu la condensation à l'extérieur, ces caloducs étant inclinés vers le bas en direction du fourreau et passant au voisinage de la surface externe du fourreau, à l'intérieur du boitier,

- et un produit fluide d'échange thermique remplissant au moins partiellement le volume interne du boitier.

Afin de bien faire comprendre l'invention, on va maintenant décrire à titre d'exemple non limitatif, en se référant aux figures jointes en annexe, un mode de réalisation d'un dispositif de refroidissement suivant l'invention, dans le cas d'un robinet à joint gelé pour du sodium liquide.

La figure 1 est une vue en coupe par un plan vertical d'un robinet à joint gelé pour du sodium liquide.

La figure 2 est une demi-vue en coupe par un plan vertical du dispositif de refroidissement associé au robinet à joint gelé représenté à la figure 1.

La figure 3 est une vue en coupe suivant AA de la figure 2.

La figure 4 est une vue en coupe d'une variante de réalisation de la fixation d'un caloduc sur le boitier.

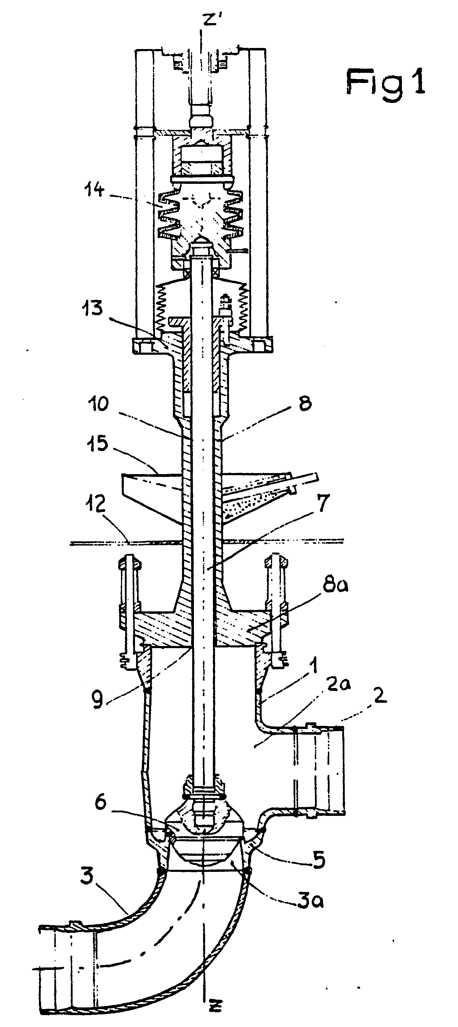

Sur la figure 1, on voit un robinet à sodium liquide dont le corps 1 est intercalée entre une conduite 2 d'arrivée de sodium et une conduite 3 de départ du sodium liquide. La conduite 2 débouche dans le corps 1 par une ouverture d'entrée 2a et la conduite 3 par une ouverture de sortie 3a. L'ouverture de sortie 3a est équipée d'un siège 5 pouvant recevoir un opercule 6 lui-même solidaire d'une tige de commande verticale 7. Lorsque l'opercule est en position sur le siège 5, comme représenté sur la figure 1, le robinet est fermé et le sodium ne peut passer de la conduite 2 à la conduite 3.

La tige de commande 7 est disposée à l'intérieur d'un fourreau 8 à axe vertical prolongeant le corps 1 vers le haut et fixé sur celui-ci par sa base 8a.

Le diamètre intérieur du fourreau 8 est un peu supérieur au diamètre extérieur de la tige de commande 7, si bien qu'il subsiste un espace annulaire 10 entre la tige 7 et le fourreau 8. Cet espace annulaire 10 se remplit de sodium provenant de la chambre 1, le fourreau débouchant dans ce corps par une ouverture 9 prévue dans la base 8a du fourreau.

Les conduites 2 et 3 ainsi que le corps 1 du robinet sont entourées par une matière calorifuge jusqu'au niveau de la paroi 12 limitant le calorifuge.

Le fourreau comporte à sa partie supérieure une plaque 13 sur laquelle vient reposer le mécanisme 14 de déplacement de la tige de commande 7 reliée par sa partie supérieure à ce mécanisme.

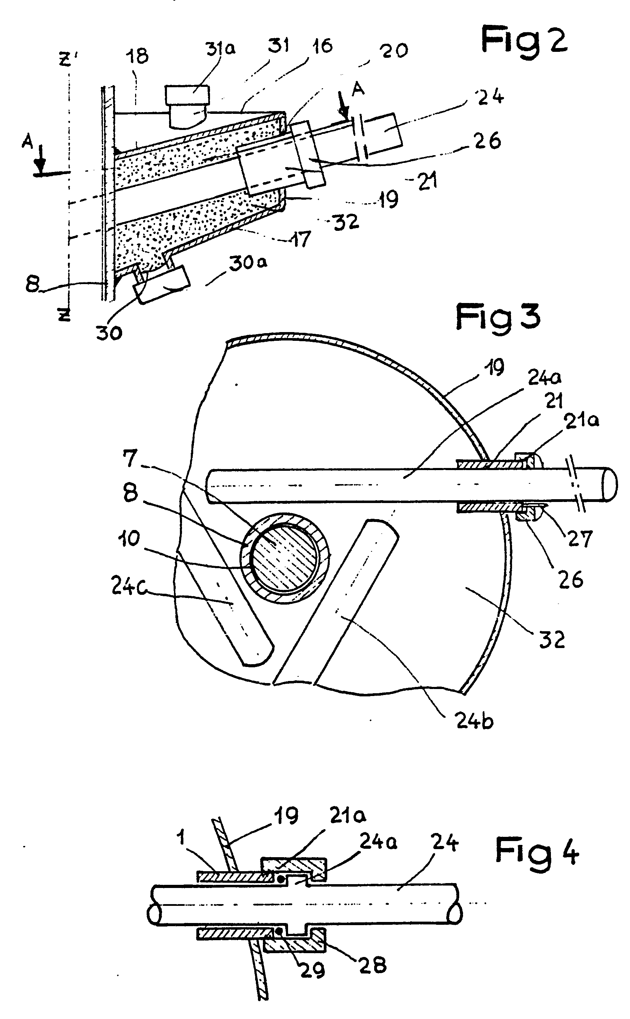

Autour du fourreau 8, au-dessus de la limite 12 du calorifuge est placé un dispositif de refroidissement suivant l'invention qui sera décrit en se référant aux figures 2 et 3.

Le mécanisme 14 de déplacement de la tige de manoeuvre et le dispositif de refroidissement 15 sont donc directement exposés au milieu ambiant, alors que le robinet et la conduite de sodium sur laquelle est disposé ce robinet sont isolés par un calorifuge.

En se référant aux figures 2 et 3, on voit que le dispositif de refroidissement 15 comporte un boitier 16 symétrique de révolution autour de l'axe ZZ' du fourreau et de la tige de commande constitué par deux viroles tronconiques 17 et 18 et par une virole cylindrique 19 dont les axes sont confondus avec l'axe ZZ'.

Les viroles tronconiques 17 et 18 sont soudées le long de leur petite base, sur la surface extérieure du fourreau 8. La virole cylindrique externe 19 est soudée sur les viroles tronconiques 17 et 18, le long de leur grande base.

La virole 17, disposée à la partie inférieure du boitier, c'est-à-dire le plus près de la chambre du robinet 1, a un angle au sommet inférieu à l'angle au sommet de la virole 18.

L'espacement des viroles 17 et 18, suivant la direction axiale du fourreau, c'est-à-dire l'espacement des zones de soudure de ces deux viroles sur le fourreau, est un peu supérieur au diamètre extérieur du fourreau 8.

La virole externe 19 est percée de trois trous tels que 20 dans lequels sont fixés par soudure des manchons tels que 21. Le manchon 21 permet le passage et la fixation d'un caloduc 24, la direction du manchon et du caloduc étant inclinée vers le bas par rapport à l'horizontale, en direction du fourreau 8. La direction du caloduc 24 est également telle que la partie de ce caloduc située à l'intérieur du boitier 16 passe au voisinage de la surface extérieure du fourreau 8.

Les trois caloducs 24a, 24b et 24c comme il est visible sur la figure 3, ont des positions qui se déduisent les unes des autres par rotation de 120° autour de l'axe ZZ'.

Les caloducs 24 soit fixés sur le boitier 16 grâce au manchon 21 qui comporte une partie filetée 21a sur laquelle vient se fixer un écrou 26 permettant le serrage d'une partie tronconique fendue 27 disposée à l'extrémité du manchon 21 permettant le serrage du caloduc 24 par vissage de l'écrou 26. Il est également possible de réaliser le serrage grâce à un joint tronconique fendu indépendant du manchon 21 disposé dans le prolongement de celui-ci et syrré par l'écrou 26.

Chacun des caloducs 24 est constitué par un tube renfermant un fluide d'échange thermique et des moyens pour la canalisation de ce fluide à l'intérieur du caloduc 24. La partie des caloducs 24 disposée à l'intérieur du boitier 16 assure un prélévement de chaleur qui se traduit par une élévation de la température du fluide d'échange et une évaporation de celuici, la vapeur remontant alors vers l'extrémité supérieure du caloduc 24 située à l'extérieur du boitier 16. Cette partie du caloduc 24 est introduite dans un dispositif de prélévement de chaleur ou laissée en contact avec l'air ambiant, ce qui permet la condensation du fluide d'échange thermique, ce fluide repassant ainsi à l'état liquide et redescendant par gravité dans le caloduc vers son extrémité inférieure disposée à l'intérieur du boitier 16, au voisinage du fourreau 8.

La virole tronconique supérieure 18 du boitier 16 est percée d'au moins une ouverture sur laquelle est fixée une portion de tubulure 31 qui peut être fermée par un bouchon 31a. De même, la virole tronconique inférieure 17 est percée d'une ouverture au niveau de laquelle est fixée une portion de tubulure 30 qui peut être fermée par un bouchon 30a.

Les dispositifs 31, 31a et 30, 30a permettent respectivement, l'introduction ou la vidange d'une poudre métallique 32 remplissant le volume interne du boitier 16. On utilise de la poudre de cuivre de fine granulométrie qui est vibrée pour assurer une bonne cohésion des grains. La poudre métallique 32 remplissant le boitier 16 constitue un produit fluide d'échange thermique entre le fourreau 8 et les caloducs 24.

Lorsque le sodium liquide de la chambre 1 du robinet vient remplir l'espace annuaire 10 situé entre la tige de commande 7 et le fourreau 8, la chaleur de ce sodium liquide, au niveau du dispositif de refroidissement 15 est transmise par l'intermédiaire du fourreau 8 et de la poudre métallique 32 à l'extrémité inférieure des caloducs 24. Cette chaleur permet l'évaporation du liquide d'échange thermique contenu dans le caloduc, la vapeur de ce liquide remontant ensuite vers l'extrémié refroidie du caloduc, à l'extérier du boitier 16 où la vapeur du liquide d'échange est condensée. Le liquide condensé redescend alors par gravité à la partie inférieure du caloduc 24 à l'intérieur du boitier 16, où ce liquide est à nouveau vaporisé par la chaleur de l'anneau de sodium 10 transmise par l'intermédiaire du fourreau 8 et de la poudre 32.

On obtient ainsi un refroidissement intense de l'anneau de sodium au niveau du boitier 16 et sur toute la longueur de celui-ci. L'anneau de sodium 10 est ainsi solidifié, ce qui permet d'obtenir une bonne étanchéité autour de la tige de manoeuvre 7.

La hauteur du boitier 16 dans la direction axiale du fourreau 8 est choisie de façon que l'étanchéité assurée par l'anneau de sodium solidifié soit suffisante et pour que l'anneau de sodium solide soit stable pendant le fonctionnement du robinet. La hauteur de la zone de refroidissement ne doit cependant pas être trop grande pour éviter de réduire la manoeuvrabilité de la tige 7.

C'est la raison pour laquelle on choisit une hauteur du boitier du dispositif de refroidissement au moins égale au diamètre extérieur du fourreau 8 et de préférence voisine de 1,5 fois ce diamètre.

L'inclinaison vers le bas du caloduc 24, en direction du fourreau 8, est déterminée par les caractéristiques de viscosité du liquide d'échange contenu dans le caloduc. Cet angle est généralement voisin de 10° pour assurer un retour du liquide vers la partie basse du caloduc, dans de bonnes conditions.

Sur la figure 4, on voit un second mode de fixation d'un caloduc 24 sur la virole cylindrique externe 19 d'un boitier 16, pir l'intermédiaire d'un manchon fileté 21.

Le caloduc 24 comporte une zone 24a élargie diamètralement et un écrou 28 permet, par vissage sur la partie filetée 21a du manchon 21, de serrer un joint d'étanchéité 29 intercalé entre la partie élargie 24a du caloduc 24 et l'extrémité du manchon 21. Un tel montage permet de réaliser un assemblage totalement étanche entre le caloduc et le boitier 16.

On peut alors utiliser, pour assurer un couplage thermique optimal entre le fourreau 8 et le caloduc 24, à l'intérieur du boitier 16, un liquide bon conducteur de la chaleur.

On peut ainsi utiliser comme liquide d'échange thermique à l'intérieur du boitier 16 un métal tel que le mercure ou un alliage à bas point de fusion tel qu'un alliage du type Darcey ou encore un alliage plombbismuth. On pourrait également utiliser un liquide à très faible tension de vapeur comme une huile silicone ou encore un liquide organique du type terphényl.

Dans le cas de l'utilisation d'un liquide dont le coefficient de dilatation est plus grand que le coefficient de dilatation de l'acier constituant le caisson, on n'effectue qu'un remplissage partiel de ce caisson, de façon à immerger complétement le caloduc 24 dans le liquide d'échange thermique tout en laissant un volume de ce caisson non rempli pour permettre la dilatation du liquide d'échange thermique.

On voit que les principaux avantages du dispositif de refroidissement suivant l'invention sont de réaliser un refroidissement intense sur une longueur parfaitement contrôlée du fourreau renfermant la tige de commande, d'être d'un encombrement réduit et de permettre d'utiliser des fourreaux et des tiges de commande de hauteur réduite. Le dispositif est d'autre part simple à réaliser et d'un fonctionnement très sûr. Ce dispositif utilise des caloducs standard qui sont des composants qui peuvent être trouvés facilement dans le commerce.

L'invention ne se limite pas au mode de réalisation qui vient d'être décrit. C'est ainsi qu'il est possible d'utiliser un caisson d'une forme différente de celle qui a été décrite, par exemple un caisson de forme cylindrique et d'une hauteur suffisante pour permettre d'y loger un caloduc en position inclinée. Un caisson tronconique a cependant l'avantage de limiter le volume du boitier pour une même inclinaison des caloducs.

On peut également utiliser plusieurs jeux de caloducs superposés suivant la direction axiale du fourreau, logés dans un même boitier ou dans des boitiers différents. On peut évidemment associer plusieurs dispositifs de refroidissement en série, disposés les uns à la suite des autres sur le fourreau.

On pourra utiliser tout type de caloducs dont les températures de fonctionnement sont compatibles avec les conditions d'utilisation qui dépendent elles-mêmes de la nature du liquide à bas point de fusion contrôlé par le robinet.

On pourra utiliser un produit fluide d'échange thermique, à l'intérieur du boitier, différent d'une poudre ou d'un liquide conducteur pour le couplage thermique entre le fourreau et les caloducs.

On pourra choisir un boitier d'une hauteur, suivant la direction axiale du fourreau, différente de celle qui a été prescrite à savoir une fois et demi de diamètre du fourreau. Cependant, pour concilier les divers impératifs concernant l'étanchéité et la manoeuvrabilité de la tige de commande, cette hauteur du boitier doit être comprise entre une fois et deux fois le diamètre extérieur du fourreau.

Enfin, le dispositif de refroidissement suivant l'invention peut servir non seulement dans le cas d'un robinet destiné à régler l'écoulement de sodium liquide, dans un circuit d'un réacteur nucléaire à neutrons rapides mais encore dans le cas de tout robinet à joint gelé destiné à régler l'écoulement d'un liquide à bas point de fusion, dans des industries telles que l'industrie chimique.

## Revendications

1. Dispositif de refroidissement du fourreau (8) de la tige de commande (7) d'un robinet à joint gelé destiné à régler l'écoulement d'une substance à bas point de fusion et comportant un corps (1) recevant la substance liquide ayant une ouverture d'entrée (2a), une ouverture de sortie (3a) qui peut être fermée par un opercule (6) solidaire de la tige de commande (7) ainsi qu'une ouverture (9) de mise en communication de la chambre (1) avec le fourreau (8) disposé verticalement de telle sorte que la substance liquide vienne remplir l'espace annulaire 10 réservé entre le fourreau (8) et la tige de commande (7) pour y constituer localement un joint gelé par refroidissement dans le fourreau (8),
caractérisé par le fait qu'il est constitué par:
- un boitier (16) symétrique de révolution fixé autour du fourreau (8) coaxialement à celui-ci et fermé à sa périphérie par une virole externe (19) coaxiale au fourreau (8),
- au moins trois caloducs (24) du type à évaporation et condensation d'un liquide d'échange thermique, traversant la virole externe (19) du boitier (16), de façon que la partie du caloduc (24) où a lieu l'évaporation du liquide d'échange soit à l'intérieur du boitier (16) et la partie où lieu la condensation, à l'extérieur, ces caloducs (24) étant inclinés vers le bas en direction du fourreau (8) et passant au voisinage de la surface externe du fourreau (8), à l'intérieur du boitier (16).
- et un produit fluide d'échange thermique (32) remplissant au moins partiellement le volume interne du boitier (16).

2. Dispositif de refroidissement suivant la revendication 1, caractérisé par le fait que le boitier (16) est constitué par deux viroles tronconiques (17 et 18) ayant leur axe confondu avec l'axe du fourreau (8) soudées sur la surface externe du fourreau (8), le long de leur petite base, espacées suivant la direction axiale du fourreau (8), évasées vers le haut et fixées le long de leur grande base à une virole cylindrique (19) ayant son axe confondu avec l'axe du fourreau (8).

3. Dispositif de refroidissement suivant la revendication 2, caractérisé par le fait que la virole inférieure (17) a un angle au sommet plus faible que la virole supérieure (18).

4. Dispositif de refroidissement suivant la revendication 1, caractérisé par le fait que les caloducs font un angle voisin de 10° avec le plan horizontal.

5. Dispositif de refroidissement suivant l'une quelconque des revendications 1 à 4, caractérisé par le fait que le produit fluide d'échange thermique disposé à l'intérieur du boitier (16) est une poudre métallique tassée par vibrage.

6. Dispositif de refroidissement suivant l'une quelconque des revendications 1 à 4, caractérisé par le fait que le produit fluide d'échange thermique disposé à l'intérieur du boitier (16) est un liquide conducteur appartenant au groupe : mercure, métal ou alliage à bas point de fusion, huile silicone, liquide organique du type terphényl.

7. Dispositif de refroidissement suivant l'une quelconque des revendications 1 à 6, caractérisé par le fait que la hauteur du boitier (16), suivant la direction axiale du fourreau (8), est comprise entre une fois et deux fois le diamètre du fourreau (8) et de préférence voisine de 1,5 fois ce diamètre.

8. Dispositif de refroidissement suivant l'une quelconque des revendications 1 à 7, dans le cas d'un robinet destiné à régler l'écoulement de sodium liquide dans un circuit d'une centrale nucléaire à neutrons rapides.

## Patentansprüche

1. Vorrichtung zum Abkühlen der Büchse (8) der Betätigungsspindel (7) eines Ventils mit erstarrter Dichtung, wobei das Ventil zur Steuerung des Flusses einer Substanz mit niedrigem Schmelzpunkt dient und einen Ventilkörper (1) aufweist, der die flüssige Substanz aufnimmt und eine Eingangsöffnung (2a), eine Ausgangsöffnung (3a) aufweist, die durch einen Deckel (6) geschlossen werden kann, die mit der Betätigungsspindel (7) fest verbunden ist und wobei das Ventil eine Öffnung (9) zum Verbinden der Ventilkammer (1) mit der Büchse (8) aufweist, die vertikal derart angeordnet ist, dan die flüssige Substanz den Ringraum (10) füllt, der zwischen der Büchse (8) und der Betätigungsspindel (7) gebildet wird, um dort lokal in der Büchse (8) eine durch Erstarrung zustandegekommene Dichtung zu bilden, dadurch gekennzeichnet, daß die Vorrichtung besteht aus:

- einem drehsymmetrischen Gehäuse (16), das um die Büchse (8) koaxial an dieser befestigt ist und an ihrem Rand mit einem Außenring (19) verschlossen ist, der koaxial zur Büchse (8) angeordnet ist,
- mindestens drei Wärmebrücken (24) des Typs, der mit Verdampfung und Kondensation einer Wärmetauschflüssigkeit arbeitet, wobei die Wärmebrücken den äußeren Ring (19) des Gehäuses (16) derart durchqueren, daß der Teil der Wärmebrücke (24), wo die Verdampfung der Wärmetauscherflüssigkeit stattfindet, im Inneren des Gehäuses (16) angeordnet ist und der Teil, in dem die Kondensation stattfindet, außerhalb des Gehäuses, wobei die Wärmebrücken (24) nach unten in Richtung auf die Büchse (8) geneigt sind und in der Nähe der äußeren Fläche der Büchse (8) im Inneren des Gehäuses (16) angeordnet sind, und
- einem thermischen Austauschfluid (32), das mindestens teilweise das Innenvolumen des Gehäuses (16) ausfüllt.

2. Vorrichtung nach Anspruch 1, dadurch gekennzeichnet, daß das Gehäuse (16) aus zwei kegelstumpfförmigen Ringen (17, 18) besteht, deren Achse mit der Achse der Büchse (8) zusammenfällt, die auf der Außenfläche der Büchse (8) entlang ihrer kleinen Basislinie angeschweißt, in Axialrichtung der Büchse (8) beabstandet, nach oben geöffnet und entlang ihrer großen Basislinie an einem Zylinderring (19) befestigt sind, dessen Achse mit der Büchsenachse (8) zusammenfällt.

3. Vorrichtung nach Anspruch 2, dadurch gekennzeichnet, daß der untere Ring (17) einen spitzen Winkel hat, der kleiner ist als der des oberen Rings (18).

4. Vorrichtung nach Anspruch 1, dadurch gekennzeichnet, daß die Wärmebrücken mit der Horizontalen einen Winkel von 10° anschließen.

5. Vorrichtung nach einem der vorstehenden Ansprüche, dadurch gekennzeichnet, daß das thermische Wärmetauscherfluid im Inneren des Gehäuses (16) ein durch Vibrieren verdichtetes Metallpulver ist.

6. Vorrichtung nach einem der Ansprüche 1 bis 4, dadurch gekennzeichnet, daß das im Inneren des Gehäuses (16) angeordnete thermische Wärmetauscherfluid eine leitende Flüssigkeit ist, die aus der Gruppe Merkur, Metall oder Legierung mit niedrigem Schmelzpunkt, Silikonöl oder organische Flüssigkeit vom Terpentyltyp, gewählt ist.

7. Vorrichtung nach einem der Ansprüche 1 bis 6, dadurch gekennzeichnet, daß die Höhe des Gehäuses (16) in Axialrichtung der Büchse (8) zwischen einem Durchmesser und zwei Durchmessern der Büchse (8), vorzugsweise in der Nähe des 1,5-fachen dieses Durchmessers liegt.

8. Vorrichtung nach einem der Ansprüche 1 bis 7, zur Verwendung bei einem Ventil zum Steuern des Durchflusses von flüssigem Natrium in einem Kreis eines Kernkraftwerks mit schnellen Neutronen.

**Claims**

1. A device for cooling the sleeve (8) of the control rod (7) of a frozen-seal valve adapted to control the flow of a substance having a low melting point and comprising a body (1) receiving the liquid substance and having an inlet opening (2a), an outlet opening (3a) which latter may be closed by a closure member (6) connected to the control rod (7) and an opening (9) putting the chamber (1) in communication with the sleeve (8) which is disposed vertically so that the liquid substance fills the annular space (10) provided between the sleeve (8) and the control rod (7) so as to form locally therein a frozen-seal by the cooling thereof in the sleeve (8), characterized by the fact that it is comprised of :
- a case (16) symmetrical of revolution fixed around the sleeve (8) in coaxial relation to the latter and closed, at its periphery by an outer shell (19) coaxial with the sleeve (8),
- at least three heat pipes (24) of the thermal exchange liquid evaporating and condensing type extending through the outer shell (19) of the case (16) so that the part of the heat pipe (24) where the evaporation of the exchange liquid occurs is inside the case (16) and the part where the condensation of the exchange liquid occurs is located outside the case (16) said heat pipes (24) being downwardly inclined toward the sleeve (8) and passing in the vicinity of the outer surface of the sleeve (8) inside the case (16),
and a fluid thermal exchange product (32) filling at least partly the inner volume of the case (16).

2. A device according to claim 1, characterized by the fact that the case (16) comprises two frustoconical shells (17, 18) having their axis coincident with the axis of the sleeve (8) welded along the outer surface of the sleeve (8) along their small base; spaced apart axially of the sleeve (8), upwardly divergent and fixed along their large base to a cylindrical shell (19) which has its axis coincident with the axis of the sleeve (8).

3. A device according to claim 2, characterized by the fact that the lower shell (17) has an apex angle which is less than the apex angle of the upper shell (18).

4. A device according to claim 1, characterized by the fact that the heat pipes make an angle in the neighbourhood of 10° with the horizontal plane.

5. A device according to any one of the claims 1 to 4, characterized by the fact that the thermal exchange fluid product disposed inside the case (16) is a metal powder settled by vibration.

6. A device according to any one of the claim 1 to 4 characterized by the fact that the thermal exchange fluid product disposed inside the case (16) is a conductive liquid selected from the group comprising : mercury, metal or alloy having a low melting point, silicone oil, organic liquid of the terphenyl type.

7. A device according to any one of the claims 1 to 6, characterized by the fact that the height of the case (16) axially of the sleeve (8) is between one and two times the diameter of the sleeve (8) and preferably in the neibourhood of 1.5 times said diameter.

8. A device according to any one of the claims 1 to 7, in the case of a valve for controlling the flow of liquid sodium in a circuit of a fast neutron nuclear power station.

Fig 1

Fig 2

Fig 3

Fig 4